# EUROPEAN PATENT SPECIFICATION

(11) **EP 4 146 707 B1**
(45) Date of publication and mention of the grant of the patent: **14.02.2024**
(21) Application number: 21721549.0
(22) Date of filing: 28.04.2021
(51) Int. Cl.: C08B 11/02, C08B 31/10

(54) **MECHANICAL TREATMENT OF POLYSACCHARIDE WITH HYDROPHOBIC ALCOHOL**
MECHANISCHE BEHANDLUNG VON POLYSACCHARID MIT HYDROPHOBEM ALKOHOL
TRAITEMENT MÉCANIQUE DU POLYSACCHARIDE AVEC DE L'ALCOOL HYDROPHOBE

(30) Priority: 06.05.2020 EP 20173234
(43) Date of publication of application: 15.03.2023
(73) Proprietor: BASF SE, 67056 Ludwigshafen am Rhein (DE)
(72) Inventor: HANSCH, Markus, 67056 Ludwigshafen am Rhein (DE); GOTTSCHLING, Ingo, 67056 Ludwigshafen Am Rhein (DE); RAETHER, Roman Benedikt, 67056 Ludwigshafen Am Rhein (DE); BAUER, Frederic, 67056 Ludwigshafen Am Rhein (DE)
(74) Representative: BASF IP Association
(86) International application number: PCT/EP2021/061166
(87) International publication number: WO 2021/224090

(56) References cited:
- CN-A- 107 868 134
- CN-A- 108 358 980
- Jérôme François ET AL: "Transglycosylation: A Key Reaction to Access Alkylpolyglycosides from Lignocellulosic Biomass", ChemSusChem, vol. 11, no. 9, 16 April 2018 (2018-04-16) , pages 1395-1409, XP93076939, DE ISSN: 1864-5631, DOI: 10.1002/cssc.201800265 Retrieved from the Internet: URL:https://api.wiley.com/onlinelibrary/td m/v1/articles/10.1002%2Fcssc.201800265>

## Description

The present invention relates to a process for the preparation of an alkyl polyglycoside comprising the step of mechanically treating a polysaccharide in the presence of an acid and a hydrophobic alcohol, wherein the mechanical treatment is effected by grinding, extruding or kneading. The invention further relates to an alkyl polyglycoside obtainable by said process.

Alkyl polyglycoside (also called APG) are important industrial non-ionic surfactants. They are usually biodegradable and based on biological raw materials, such as monoaccharides and fat.

There are two typical methods of making AGP. Either these are in a direct synthesis from glucose and e.g. via Fischer acetalization from monosaccharides like glucose or highly degraded glucose syrup and fatty alcohols. This happens at temperatures of 120 ° C and a pressure of 2,000 Pa. D

Alternatively, APG can also be prepared in two stages via a transacetylation. First, the reaction takes place with a short-chain alcohol, e.g. butanol at about 115 ° C and normal pressure for glucose and 140 °C and 400,000 Pa for starch instead of raw material. In a second reaction, the short chain alkyl glucoside with a fatty alcohol, e.g. dodecanol, at temperatures of 120 ° C and a pressure of 2,000 Pa to a long-chain alkyl glucoside.

Object was to develop a process for the preparation of an alkyl polyglycoside, which offers advantages over the prior art: no excess of hydrophobic alcohol required, allows the suppression of insoluble polydextrose, APG can be made with hydrophobic alcohols having higher than C₁₄ alkyl chains, non-edible sources of carbohydrates can be used, the APG have a high water solubility, the APG have a higher degree of polymerization, the APG have a high HLB value, and the APG have a high emulsification efficiency.

The object was solved by a process for the preparation of an alkyl polyglycoside comprising the step of mechanically treating a polysaccharide in the presence of an acid and a hydrophobic alcohol. The object was also solved by an alkyl polyglycoside obtainable by said process.

The **hydrophobic alcohol** may be linear or branched, saturated or unsaturated C₁ - C₂₂ (preferably C₁ - C₁₈, in particular C₁₀ - C₁₆) aliphatic alcohol, or mixtures thereof. The hydrophobic alcohol can be a linear or branched C₁ - C₂₂ alkanol, preferably a C₁ - C₁₈ alkanol, or in particular a C₁₀ - C₁₆ alkanol or mixtures thereof. In another form t the hydrophobic alcohol can be a linear or branched C₆ - C₂₂ alkanol, preferably a C₈ - C₁₈ alkanol. In another form the hydrophobic alcohol is a fatty alcohol, or mixtures thereof. Suitable hydrophobic alcohols are the primary alcohols of methanol, ethanol, hexanol, heptanol, octanol, nonanol, decanol, undecanol, dodecanol, tridecanol, tetradecanol, pentadecanol, hexadecanol, octadecanol or mixtures thereof.

The molar ratio of the hydrophobic alcohol to the monomeric units of the polysaccharide is from 1:10 to 1:1.

Usually, 0,01 to 20 mmol, preferably 0,1 mmol to 6,2 mmol, of the hydrophobic alcohol are present per g polysaccharide.

The **mechanical treatment** can be effected by grinding, extruding or kneading, preferably by grinding. Grinding can by made by mills, such as swing mills, stirred mills, stirred-media mills, vibration mills, agitator mills, agitator ball mills, hammer mills or ball mills, where ball mills are preferred. In ball mills a speed of 400 to 1200, preferably 800 to 1000 rpm is suitable. For vibration mills a frequency of 1 to 50 Hz is suitable.

The mechanical treatment can be made for up to 48, 24, 18, 14, 12, 10, 8, 6, 4, 3, 2, 1, or 0.5 hours. Usually, the mechanical treatment be made for 1 min to 12 hours, preferably from 30 min to 6 hours.

The mechanical treatment is often made at a reaction temperature of below 300, 250, 200, 150, 130, 120, 110, 100, 90, 80, 70, 60, or 50 °C, for example in a range of 0 to 300 °C, preferably 0 to 150 °C.

The **polysaccharide** may be present in form of a purified polysaccharide or a polysaccharide-containing material (e.g. natural products like wood (e.g. from spruce, pine, birch, beech, poplare), grass, hay, sprucewood, sugarcane bagasse, cotton, bast fibers).

Suitable polysaccharides are homopolysaccharides (e.g. amylose, cellulose, dextran, pectin) and heteropolysaccharides (e.g. guar, xanthan, chitosan, chitin), such as starch, cellulose, hemicellulose or guar, preferably starch or cellulose. In a preferred form the polysaccharide is alpha-cellulose.

The polysaccharide is preferably derived from cellulose, which may be present in form of a purified cellulose or a cellulose-containing material (e.g. natural products like wood, grass, hay, cotton).

The polysaccharide may have a degree of polymerization of at least 50, 100, 200, 300, 400, 500, 1000, 2000 or 5000. The polysaccharide may have a degree of polymerization of up to 10 000, 8000, 6000, 4000, 2000 or 1000. The polysaccharide may have a degree of polymerization of 100 to 2000, or 300 to 1200, or 500 to 800. The degree of polymerization may be determined by known methods, such as gel permetion chromatography, viscosimetry or carbonyl number.

The polysaccharide has usually a solubility in water at 25 °C of up to 1, 0.5, 0.3, or 0.1 g/l. The polysaccharide is usually a solid at 20 °C. The polysaccharide may have a residual moisture (e.g. from water) content of less than 20, 15, 10, 8, 6, 4, 2, or 1 wt%. The polysaccharide may have a solids content of at least 50, 70, 80, 85, 90, 92, or 95 wt.

The **acid** may be inorganic or organic acid, preferably an inorganic acid, such as mineral acids. The acid may have a pKₐ of of below 2, preferably below -2. Preferably, the acid is an inorganic acid which has a pKₐ of below 2, preferably below -2.

Suitable acids are sulfuric acid, hydrochloric acid, sulphur dioxide, sulphur trioxide, phosphoric acid, phosphotungstic acid, halo-alkanecarboxylic acid (e.g. trifluoroacetic acid), benzenesulfonic acids and derivatives thereof, methanesulfonic acid, oxalic acid and nitric acid. Preferred acids are sulfuric acid, hydrochlorid acid, and methane sulfonic acid.

The acid may be present in liquid or gaseous form (e.g. as gaseous HCl).

The acid can be used in catalytic amounts. Typically, the acid is present in an amount of 0.0001 to 10 mmol per g, or 0.001 to 1 mmol per g, or 0.01 to 1 mmol per g of polysaccharide.

The process comprises the step of mechanically treating the polysaccharide in the presence of the acid and the hydrophobic alcohol.

The the polysaccharide, the acid and the hydrophobic alcohol can be mixed in any order. They may be mixed before or during the mechanical treatment.

In one form the hydrophobic alcohol and the acid are premixed, and this premix mixed with the polysaccharide before or during the mechanical treatment.

In a preferred form the acid is contacted with the polysaccharide before the mechanical treatment to prepare an **acid impregnated polysaccharide.**

The acid impregnated polysaccharide may be obtainable by treating the polysaccharide with the acid in an **organic solvent.** Suitalble organic solvents are water, C₁-C₂₂ alkanols (e.g. methanol, ethanol, or the hydrophobic alcohol), alkyl ether (e.g. dimethylether, diethylether, methylethylether, tert-butylmethylether), C₄₋₁₈ alkanes (e.g. pentane, hexane, heptane), supercritical carbon dioxide, dichloromethane, tetryhydrofurane, ethyl acetate, methyl acetate or acetone. Preferably, the organic solvent is methanol or the hydrophobic alcohol (e.g. C₆ - C₂₂ alkanol, preferably a C₈ - C₁₄ alkanol). In a preferred form the organic solvent is methanol or ethanol. In another preferred form the organic solvent is the same as the hydrophobic alcohol.

The organic solvent can be **removed** (e.g. by filtration or evaporation) in part or completely before or during the mechanical treatment of the acid impregnated polysaccharide in the presence of the hydrophobic alcohol. In one form the organic solvent is identical to the hydrophobic alcohol, and this form the organic solvent is not removed.

In another form the acid impregnated polysaccharide may be obtainable by treating the polysaccharide with the acid in the **absence of the organic solvent.** In this form the acid may be present in gaseous form, preferably as gaseous HCl or gaseous SOs.

The acid impregnated polysaccharide can be prepared by treating of the polysaccharide with the acid from 1 min to 72 h, or from 10 min to 24 h, or from 30 min to 5 h. The treating of the polysaccharide with the acid may be made at a temperature from 0 to 150 °C, or 5 to 100 °C, or 5 to 40 °C.

The acid impregnated polysaccharide is usually a solid at 20 °C. The acid impregnated polysaccharide may have a **residual moisture** (e.g. from the organic solvent or water) content of less than 20, 15, 10, 8, 6, 4, 2, or 1 wt%. The acid impregnated polysaccharide may have a **solids content** of at least 50, 70, 80, 85, 90, 92, or 95 wt.

Typically, an **alkyl polyglycoside** is obtainable by the process according to the invention. The alkyl polyglycoside may have a degree of polymerization in the range of 1 to 50, or 1 to 30, or 1.1 to 30 or 1.2 to 20. The alkyl polyglycoside may have a degree of polymerization of above 1, 1.1 or 1.2. The alkyl polyglycoside may have a degree of polymerization of up to 20, 15, 10, 5, 4, 3, 2, 1.9, 1.8, 1.7, 1.6 or 1.5.

The alkyl polyglycoside may have a solubility in water at 25 °C of at least 0.5, 1, 2, 3, 5, 10 or 50 g/l.

The alkyl polyglycoside can be used as **surfactant** in any applications where alkyl polyglycosides according to the state of the art are already used, such as in home care, cosmetics, personal care, pharmaceuticals, detergents, cleansers, or in industrial applications, e.g. in emulsion polymerization.

### Examples:

### Example 1 - impregnated α-cellulose

### Impregnation:

In a one liter one-neck flask 3,1 g sulfuric acid (96%) was dissolved in 300 g methanol. After adding 33 g α-cellulose (solid content: 93,3 %, degree of polymerization about 500 to 700, commercially available from Sigma-Aldrich GmbH, Germany) to the acidic methanol solution, the suspension was stirred at room temperature for an hour. The solvent was evaporated at 50°C and 10 mbar using a rotary evaporator. The residue was homogenized by mortar and pistil.

### A) Mechanical treatment with cool down

4 g of the acid impregnated cellulose and 0,5 g 1-octanol were filled in a 25 ml tungsten carbide (WC) grinding beaker. The mixture was milled together with a 15 mm diameter WC-ball at 30 Hz for overall 4 h by Retsch MM400. After every hour, the mixture was allowed to cool down for 30 min. The residue was analyzed by ¹H-NMR (in D₂O) and MALDI-MS, which confirmed the octylization of the cellulose.

### B) Mechanical treatment without cool down

4 g of the acid impregnated cellulose and 0,5 g 1-octanol were filled in a 25 ml tungsten carbide (WC) grinding beaker. The mixture was milled without interruption together with a 15 mm diameter WC-ball at 30 Hz for overall 4,5 h by Retsch MM400. The residue (Sample B) was analyzed by ¹H-NMR (in D₂O) and MALDI-MS, which confirmed the octylization of the cellulose.

### MALDI(+)-MS analysis

The MALDI(+)-MS analysis of the reaction products of was made on a Bruker UltrafleXtreme TOF/TOF, Reflectron-Mode. Sample preparation: 6 µL of the aqueous sample solution were mixed with a spatula tip of 2,5-Dihydroxybenzoic acid (DHB) and 1 µL aq. NaCl solution using mortar and pistil. Peaks for the following structures (figure 3) were detected: Octylpolyglycoside, methylpolyglycoside and polyglycoside. Tables 1 and 2 summarize the peaks detected for the respective species for Example 1 A and 1 B.

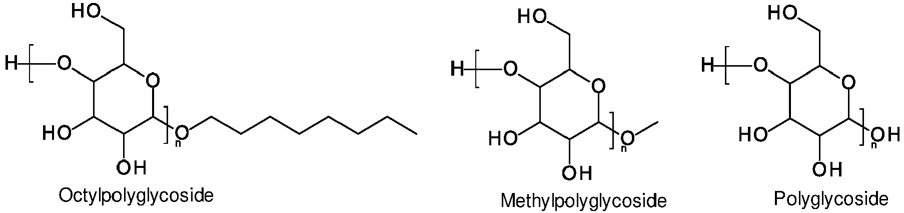

**Table 1: Detected MS-signals of Example 1 A**

| | m/z | m/z | m/z |
|---|---|---|---|
| n | (Octylpolygycoside + Na⁺) | (Methylpolyglycoside + Na⁺) | (Polyglycoside + Na⁺) |
| 1 | 315 | 217 | 203 |
| 2 | 477 | 379 | 365 |
| 3 | 639 | 541 | 527 |
| 4 | 801 | 703 | 689 |
| 5 | 963 | 865 | 851 |
| 6 | 1125 | 1027 | 1013 |
| 7 | 1287 | 1189 | 1175 |
| 8 | 1450 | 1351 | 1337 |
| 9 | 1612 | 1513 | 1499 |
| 10 | 1774 | 1676 | 1661 |
| 11 | 1936 | 1838 | 1824 |
| 12 | 2098 | 2000 | 1986 |
| 13 | 2260 | 2162 | 2148 |
| 14 | - | 2324 | - |
| 15 | - | 2486 | - |

**Table 2: Detected MS-signals of Example 1 B**

| | m/z | m/z | m/z |
|---|---|---|---|
| n | (Octylpolygycoside + Na⁺) | (Methylpolyglycoside + Na⁺) | (Polyglycoside + Na⁺) |
| 1 | 315 | 217 | 203 |
| 2 | 477 | 379 | 365 |
| 3 | 639 | 541 | 527 |
| 4 | 801 | 703 | 689 |
| 5 | 963 | 865 | 851 |
| 6 | 1125 | 1027 | 1013 |
| 7 | 1287 | 1189 | 1175 |
| 8 | 1450 | 1351 | 1337 |
| 9 | 1612 | 1513 | 1499 |
| 10 | 1774 | 1676 | 1661 |
| 11 | 1936 | 1838 | 1824 |
| 12 | 2098 | 2000 | 1986 |
| 13 | 2260 | - | 2148 |
| 14 | - | 2324 | 2310 |
| 15 | - | - | - |
| 16 | - | 2648 | - |

### Interfacial Properties

The surface tensions of solutions of the Examples 1A and 1B in distilled water were determined using the Wilhelmy plate method. The crude products of the examples were purified from unreacted alcohols by washing with chloroform. After drying the residue, the surface tension was measured. The results are summarized in Table 3. The results showed that the reaction products of Example 1 A and 1 B display surface activities.

**Table 3**

| Compound | Concentration | T | Surface Tension |
|---|---|---|---|
| Distilled Water | - | 25 °C | 72 mN/m |
| Example 1 A | 1 g/L | 25 °C | 40,0 mN/m |
| Example 1 B | 1 g/L | 25 °C | 42,3 mN/m |

### Example 2 - Impregnated Straw

### Impregnation

In an 800 ml beaker 6,8 g sulfuric acid (96 %) was dissolved in 280 g methanol. After adding 19,6 g cutted straw (from Germany) to the acidic methanol solution, the mixture was stirred at room temperature for an hour. The suspension was filtered off and the wet residue was dried at 50°C and 50 mbar for 3 h. The residue was homogenized by mortar and pistil.

### Mechanical treatment

2 g of acid impregnated straw were filled in a 25 ml tungsten carbide (WC) grinding beaker and was milled with a 15 mm WC-ball at 30 Hz for 10 min by Retsch MM400. Additional 2 g of acid impregnated straw were filled and was milled for further 60 min at 30 Hz. To the milled straw 1 g of 1-octanol/H₂SO₄-mixture (95/5, w/w) were filled and the mixture was milled for 60 min. The paste-like residue was suspended in chloroform for an hour and was filtered off. After drying at 50°C and 50 mbar for 2 h, the residue was analyzed by ¹H-NMR (in D₂O/NaOD) and MALDI-MS, which confimed the octylization of the straw.

The surface tension of solution in distilled water was determined using the Wilhelmy plate method. The result of σ(1 g/L, 25°C) = 45 mN/m showed that the reaction product displays surface activitiy.

### Example 3 - Impregnated α-cellulose

### Impregnation

In an 800 ml beaker 6,6 g sulfuric acid (96 %) was dissolved in 300 g methanol. After adding 33 g α-cellulose (as described in Example 1) to the acidic methanol solution, the mixture was suspended at room temperature for an hour. The suspension was filtered off and the wet residue was dried at 50°C and 30 mbar for 3 h. The residue was homogenized by mortar and pistil.

### A) Mechanical treatment (no additional alcohol)

4 g of the acid impregnated cellulose were filled in a 25 ml tungsten carbide (WC) grinding beaker. The mixture was milled with a 15 mm diameter WC-ball at 30 Hz for 90 min by Retsch MM400. The residue was analyzed by ¹H-NMR (in D₂O) and MALDI-MS. Peaks for the following structures were detected (cf. Table 4): Methylpolyglycoside and polyglycoside.

**Table 4: Detected MS-signals**

| n | m/z (Methylpolyglycoside + Na⁺) | m/z (Polyglycoside + Na⁺) |
|---|---|---|
| 1 | 217 | 203 |
| 2 | 379 | 365 |
| 3 | 541 | 527 |
| 4 | 703 | 689 |
| 5 | 865 | 851 |
| 6 | 1027 | 1013 |
| 7 | 1189 | 1175 |
| 8 | 1351 | 1337 |
| 9 | 1513 | 1499 |
| 10 | 1676 | 1661 |
| 11 | 1838 | 1824 |
| 12 | - | 1986 |
| 13 | 2162 | 2148 |
| 14 | 2324 | 2310 |
| 15 | 2486 | - |
| 17 | 2810 | - |

### B) Mechanical treatment with additional octanol

4 g of milled cellulose from Example 3 Aand 1 g of 1-octanol/H₂SO₄-mixture (90/10, w/w) were filled in a 25 ml tungsten carbide (WC) grinding beaker. The mixture was milled with a 15 mm diameter WC-ball at 30 Hz for overall 4 h by Retsch MM400. After every hour, the mixture was allowed to cool down for 30 min. The crude product was purified from unreacted alcohols by washing with chloroform. After drying the residue, the product was analyzed by ¹H-NMR (in D₂O) and MALDI-MS. Peaks for the following structures were detected: Octylpolyglycosid, methylpolyglycoside and polyglycoside.

**Table 5: Detected MS-signals**

| | m/z | m/z | m/z |
|---|---|---|---|
| n | (Octylpolygycoside + Na⁺) | (Methylpolyglycoside + Na⁺) | (Polyglycoside + Na⁺) |
| 1 | 315 | 217 | 203 |
| 2 | 477 | 379 | 365 |
| 3 | 639 | 541 | 527 |
| 4 | 801 | 703 | 689 |
| 5 | 963 | 865 | 851 |
| 6 | 1125 | 1027 | 1013 |
| 7 | 1287 | 1189 | 1175 |
| 8 | 1450 | 1351 | 1337 |
| 9 | 1612 | 1513 | 1499 |
| 10 | 1774 | 1676 | 1661 |
| 11 | 1936 | 1838 | 1824 |
| 12 | - | 2000 | 1986 |
| 13 | - | 2162 | 2148 |
| 14 | - | - | 2310 |

### C) Mechanical treatment without impregnation

4 g of α-cellulose (solid content: 93,3 %) and 1 g of 1-octanol/H₂SO₄-mixture (80/20, w/w) were filled in a 25 ml tungsten carbide (WC) grinding beaker. The mixture was milled with a 15mm diameter WC-ball at 30 Hz for overall 4 h by Retsch MM400. After every hour, the mixture was allowed to cool down for 30 min. The crude product was purified from unreacted alcohol by washing with chloroform. After drying the residue, the product was analyzed by ¹H-NMR (in D₂O) and MALDI-MS. Peaks for the following structures were detected: Octylpolyglycoside and polyglycoside.

**Table 6: Detected MS-signals**

| | m/z | m/z |
|---|---|---|
| n | (Octylpolygycoside + Na⁺) | (Polyglycoside + Na⁺) |
| 1 | 315 | 203 |
| 2 | 477 | 365 |
| 3 | 639 | 527 |
| 4 | 801 | 689 |
| 5 | 963 | 851 |
| 6 | 1125 | 1013 |
| 7 | 1287 | 1175 |
| 8 | 1450 | 1337 |
| 9 | 1612 | 1499 |
| 10 | 1774 | 1661 |
| 11 | 1936 | 1824 |
| 12 | - | 1986 |
| 13 | - | 2148 |
| 14 | - | 2310 |
| 15 | - | 2472 |
| 16 | - | 2634 |

### Interfacial Properties

The surface tensions of solutions of the examples 3 A, B and C in distilled water were determined using the Wilhelmy plate method. The results are summarized in Table 7. The results showed that the reaction products display surface activites.

**Table 7**

| Compound | Concentration | T | Surface Tension |
|---|---|---|---|
| Distilled Water | - | 25°C | 72 mN/m |
| Example 3 A | 1 g/L | 25°C | 71,8 mN/m |
| Example 3 B | 1 g/L | 25°C | 45,8 mN/m |
| Example 3 C | 1 g/L | 25°C | 47,6 mN/m |

### Example 4 - Without Impregnation

The α-cellulose was the same as in Example 1. The maize starch was commercially available from Roquette GmbH, Germany with a solid content of 86,5 wt%. Before milling, the polysaccharide as listed in was dried at 100 °C and 50 mbar for 3 h. After drying, the polysaccharide and acidic dodecanol solution were filled in a 25 ml tungsten carbide (WC) grinding beaker. The mixture was milled with a 15 mm WC-ball at 30 Hz for overall 4 h by Retsch MM400. After every hour, the mixture was allowed to cool down for 15-30 min. The crude product was purified from unreacted alcohols by washing with chloroform.

After drying the residue, the product was analyzed by ¹H-NMR (in D₂O) and MALDI-MS. Peaks for the following structures were detected: Dodecylpolyglycoside and polyglycoside. The recipes are listed in Table 8.

**Table 8**

| Compound | polysaccharide | amount polysaccharide | Acidic dodecanol | amount acid-solution |
|---|---|---|---|---|
| Example 4 A | α-cellulose | 4 g | H₂SO₄/H₂O (20/80, w/w) | 0,24 g |
| Example 4 B | maize starch | 4 g | H₂SO₄/Dodecanol (20/80, w/w) | 0,53 g |
| Example 4 C | α-cellulose | 4 g | H₂SO₄/Dodecanol (20/80, w/w) | 0,52 g |
| Example 4 D | α-cellulose | 4 g | MeSO₃H/Dodecanol (30/70, w/w) | 0,50 |

**Table 9: Detected MS-signals of Ex. 4 A**

| n | m/z (Polyglycoside + Na⁺) |
|---|---|
| 1 | 203 |
| 2 | 365 |
| 3 | 527 |
| 4 | 689 |
| 5 | 851 |
| 6 | 1013 |
| 7 | 1175 |
| 8 | 1337 |
| 9 | 1499 |
| 10 | 1661 |
| 11 | 1824 |
| 12 | 1986 |
| 13 | 2148 |
| 14 | 2310 |
| 15 | 2472 |
| 16 | 2634 |

**Table 10: Detected MS-signals of Ex. 4 B**

| n | m/z (Dodecylpolygycoside + Na⁺) | m/z (Polyglycoside + Na⁺) |
|---|---|---|
| 1 | 371 | 203 |
| 2 | 533 | 365 |
| 3 | 695 | 527 |
| 4 | 857 | 689 |
| 5 | 1019 | 851 |
| 6 | 1182 | 1013 |
| 7 | 1344 | 1175 |
| 8 | 1506 | 1337 |
| 9 | 1668 | 1499 |
| 10 | 1830 | 1661 |
| 11 | 1992 | 1824 |
| 12 | 2154 | 1986 |
| 13 | 2316 | 2148 |
| 14 | 2478 | 2310 |
| 15 | 2640 | 2472 |
| 16 | - | 2634 |

**Table 11: Detected MS-signals of Ex. 4 C**

| n | m/z (Dodecylpolygycoside + Na⁺) | m/z (Polyglycoside + Na⁺) |
|---|---|---|
| 1 | 371 | 203 |
| 2 | 533 | 365 |
| 3 | 695 | 527 |
| 4 | 857 | 689 |
| 5 | 1019 | 851 |
| 6 | 1182 | 1013 |
| 7 | 1344 | 1175 |
| 8 | 1506 | 1337 |
| 9 | 1668 | 1499 |
| 10 | 1830 | 1661 |
| 11 | 1992 | 1824 |
| 12 | 2154 | 1986 |
| 13 | 2316 | 2148 |
| 14 | 2478 | 2310 |
| 15 | - | 2472 |
| 16 | - | 2634 |

**Table 12: Detected MS-signals of Ex. 4 D**

| n | m/z (Dodecylpolygycoside + Na⁺) | m/z (Polyglycoside + Na⁺) |
|---|---|---|
| 1 | 371 | 203 |
| 2 | 533 | 365 |
| 3 | 695 | 527 |
| 4 | 857 | 689 |
| 5 | 1019 | 851 |
| 6 | 1182 | 1013 |
| 7 | 1344 | 1175 |
| 8 | 1506 | 1337 |
| 9 | 1668 | 1499 |
| 10 | 1830 | 1661 |
| 11 | 1992 | 1824 |
| 12 | 2154 | 1986 |
| 13 | 2316 | 2148 |
| 14 | 2478 | 2310 |
| 15 | - | 2472 |
| 16 | - | 2634 |
| 17 | - | 2796 |

The surface tensions of solutions of the examples 4 A to D in distilled water were determined using the Wilhelmy plate method. The results are summarized in Table 13. The results showed that the reaction products of Example 4 display surface activities.

**Table 13**

| Compound | Concentration | T | Surface Tension |
|---|---|---|---|
| Distilled Water | - | 25 °C | 72 mN/m |
| Example 4 A | 1 g/L | 25 °C | 70,3 mN/m |
| Example 4 B | 1 g/L | 25 °C | 29,7 mN/m |
| Example 4 C | 1 g/L | 25 °C | 26,4 mN/m |
| Example 4 D | 1 g/L | 25 °C | 25,5 mN/m |

### Example 5 - Polysaccharide from straw or wood

Following raw materials were used:
Straw: Native straw from Germany was cut in small pieces and 1,5-2 g were filled in a 25 ml stainless steel grinding beaker. The straw was milled with a 15 mm stainless steel ball at 30 Hz for 3 min by Retsch MM400. After repeating this procedure several times, the pre-milled straw was dried at 100 °C and 50 mbar for 3 h. The solid content was 88,5 %.

Straw meal: Commercially available from Agri-Stro B.V., Netherlands as Hackselstroh dust-free. 2-2,5 g were filled in a 25 ml stainless steel grinding beaker. The straw meal was milled with a 15 mm stainless steel ball at 30 Hz for 5 min by Retsch MM400. After repeating this procedure several times, the pre-milled straw meal was dried at 100 °C and 50 mbar for 3 h. The solid content was 89,2 %.

Birch, Pine or Beech (all from Germany): The stored wood was sawed, and the wood shavings were collected. The shavings were dried at 100 °C and 50 mbar for 3 h. The solid content of the appropriate wood was 82,9 % for birch, 85,7 % for pine and 87,0 % for beech.

Straw (A), straw meal (B), wood shavings from birch (C), pine (D) and beech (E) were used. The dried residue and the acidic dodecanol solution were filled in a 25 ml tungsten carbide (WC) grinding beaker. The mixture was milled with a 15mm WC-ball at 30 Hz for overall 4 h by Retsch MM400. After every hour, the mixture was allowed to cool down for 15-30 min. The crude product was purified from unreacted alcohols by washing with chloroform. After drying the residue, the soluble part of the product was analyzed by ¹H-NMR (in D₂O). The recipes are listed in table 6. The surface tensions of solutions in distilled water were determined using the Wilhelmy plate method. The results are summarized in Table 14 and 15. The results showed that the reaction products display surface activities.

**Table 14**

| Compound | polysaccharide | amount polysaccharide | Acidic dodecanol | amount acid-solution |
|---|---|---|---|---|
| Example 5 A | straw | 4 g | H₂SO₄/Dodecanol (20/80, w/w) | 0,50 g |
| Example 5 B | straw meal | 4 g | H₂SO₄/Dodecanol (30/70, w/w) | 0,50 g |
| Example 5 C | birch | 4 g | H₂SO₄/Dodecanol (30/70, w/w) | 0,53 g |
| Example 5 D | pine | 4 g | H₂SO₄/Dodecanol (30/70, w/w) | 0,53 g |
| Example 5 E | beech | 4 g | H₂SO₄/Dodecanol (30/70, w/w) | 0,52 g |

**Table 15**

| Compound | Concentration | T | Surface Tension |
|---|---|---|---|
| Distilled Water | - | 25 °C | 72 mN/m |
| Example 5 A | 1 g/L | 25 °C | 44 mN/m |
| Example 5 B | 1 g/L | 25 °C | 49, 6 mN/m |
| Example 5 C | 1 g/L | 25 °C | 41,1 mN/m |
| Example 5 D | 1 g/L | 25 °C | 40,4 mN/m |
| Example 5 E | 1 g/L | 25 °C | 40,7 mN/m |

### Example 6 : Polysaccharide from pulp

Washed pulp from industrial paper production based on spruce from Sweden (pulp obtained after the refiner (8 bar, 170 °C in 12 inch disc refiner) and washing step) was dried at 100 °C and 50 mbar for 4 h. The solid content was 27,2 %. 2 g of dried pulp was filled in a 25 ml tungsten carbide (WC) grinding beaker and was milled with a 15 mm WC-ball at 30 Hz for 5 min by Retsch MM400. Additional 2 g of dried pulp was filled and was milled for further 5 min at 30 Hz. To the milled pulp 0,52 g of H₂SO₄-/1-dodecanol mixture (30/70, w/w) were filled and the mixture was milled analog for overall 4 h. After every hour, the mixture was allowed to cool down for 15 min. The crude product was purified from unreacted alcohols by washing with chloroform. After drying the residue, the product was analyzed by ¹H-NMR (in D₂O).

The surface tension of solution of in distilled water were determined using the Wilhelmy plate method. The result of σ(1g/L, 25°C)= 44,3 mN/m showed that the reaction product displays surface activity.

### Example 7: Hexadecyl- and octadecylpolyglycosid

Before milling, α-cellulose as used in Example 1 was dried at 100°C and 50 mbar for 3 h to a solid content of 93 %. 4 g of the dried cellulose and 0,70 g of C16/C18-alcohol/H₂SO₄-mixture (70/30, w/w) (Hydroxyl value for C16/C18-alcohol: 217,4mg KOH/g) were filled in a 25 ml tungsten carbide (WC) grinding beaker. The mixture was milled with a 15 mm WC-ball at 30 Hz for overall 5 h by Retsch MM400. After every hour, the mixture was allowed to cool down for 30 min. The crude product was purified from unreacted alcohols by washing with chloroform. After drying the residue, the product was analyzed by ¹H-NMR (in D₂O) and MALDI-MS. Peaks for the following structures were detected, see also Table 16: Polyglycoside, hexadecylpolyglycoside and octadecylpolyglycoside.

The surface tension of solution in distilled water was determined using the Wilhelmy plate method. The result of σ(1g/L, 25°C)= 43,8 mN/m showed that the reaction product displays surface activity.

**Table 16: Detected MS-signals**

| n | m/z (Octadecylpolygycoside + Na⁺) | m/z (Hexadecylpolygycoside + Na⁺) | m/z (Polyglycoside + Na⁺) |
|---|---|---|---|
| 1 | 455 | 427 | 203 |
| 2 | 617 | 589 | 365 |
| 3 | 779 | 751 | 527 |
| 4 | 941 | 913 | 689 |
| 5 | 1104 | 1076 | 851 |
| 6 | 1266 | 1238 | 1013 |
| 7 | 1428 | 1400 | 1175 |
| 8 | 1590 | 1562 | 1337 |
| 9 | 1752 | 1724 | 1499 |
| 10 | 1914 | 1886 | 1661 |
| 11 | 2076 | - | 1824 |
| 12 | 2238 | - | 1986 |
| 13 | - | - | 2148 |
| 14 | - | - | 2310 |

### Example 8: Behenylpolyglycoside

Before milling, α-cellulose as in Example 1 was dried at 100°C and 50 mbar for 3 h. 4054 mg of the dried cellulose, 411 mg of behenyl alcohol (1-docosanol) and 156 mg MeSOsH were filled in a 25 ml tungsten carbide (WC) grinding beaker. The mixture was milled with a 15 mm diameter WC-ball at 30 Hz for overall 4 h by Retsch MM400. After every hour, the mixture was allowed to cool down for 30 min. The crude product was purified from unreacted alcohol by washing with chloroform. After drying the residue, the product was analyzed by ¹H-NMR (in D₂O) and MALDI-MS. Peaks for the following structures were detected: Polyglycoside, behenylpolyglycoside. The surface tension of the solution in distilled water was determined using the Wilhelmy plate method. The result of σ(1g/L, 25°C) = 67,9 mN/m showed that the reaction product displays surface activity.

**Table 17: Detected MS-signals**

| n | m/z (Octadecylpolygycoside + Na⁺) | m/z (Polyglycoside + Na⁺) |
|---|---|---|
| 1 | 511 | 203 |
| 2 | 673 | 365 |
| 3 | 835 | 527 |
| 4 | 997 | 689 |
| 5 | 1160 | 851 |
| 6 | 1322 | 1013 |
| 7 | 1484 | 1175 |
| 8 | 1646 | 1337 |
| 9 | 1808 | 1499 |
| 10 | 1970 | 1661 |
| 11 | 2132 | 1824 |
| 12 | 2294 | 1986 |
| 13 | | 2148 |
| 14 | | 2310 |

## Claims

1. A process for the preparation of an alkyl polyglycoside comprising the step of mechanically treating a polysaccharide in the presence of an acid and a hydrophobic alcohol, wherein the mechanical treatment is effected by grinding, extruding or kneading and wherein the hydrophobic alcohol is a linear or branched C₆ - C₂₂ alkanol, and wherein the molar ratio of the hydrophobic alcohol to the monomeric units of the polysaccharide is from 1:10 to 1:1.

2. The process according to claim 1 where the acid is contacted with the polysaccharide before or during the mechanical treatment.

3. The process according to claims 1 to 2 where the mechanical treatment is effected by grinding which is made by swing mills, stirred mills, stirred-media mills, vibration mills, agitator mills, agitator ball mills, hammer mills or ball mills.

4. The process according to claims 1 to 3 where the mechanical treatment is made at a reaction temperature of 0 to 300 °C, preferably 0 to 150 °C.

5. The process according to claims 1 to 4 where the mechanical treatment is made for 1 min to 12 hours.

6. The process according to claims 1 to 5 where the polysaccharide has a residual moisture content of less than 20 wt%, preferably less than 5 wt%.

7. The process according to claims 1 to 6 where the acid has a pKₛ of of below 2, preferably below -2.

8. The process according to claims 1 to 7 where the acid is sulfuric acid, hydrochloric acid, sulphur dioxide, sulphur trioxide, phosphoric acid, phosphotungstic acid, halo-alkanecarboxylic acid, benzenesulfonic acids and derivatives thereof, methanesulfonic acid, oxalic acid and nitric acid.

9. The process according to claims 1 to 8 where the acid is contacted with the polysaccharide before the mechanical treatment to prepare an acid impregnated polysaccharide.

10. The process according to claim 9 where the acid impregnated polysaccharide is obtainable by treating the polysaccharide with an acid in an organic solvent.

11. The process according to claim 10 where the organic solvent is water, C₁-C₂₂ alkanols, alkyl ether, C₄₋₁₈ alkanes, supercritical carbon dioxide, dichloromethane, tetrahydrofurane, ethyl acetate, methyl acetate or acetone.

12. The process according to claims 1 to 11 where the polysaccharide is derived from starch, cellulose, hemicellulose or guar.

## Patentansprüche

1. Verfahren zur Herstellung eines Alkylpolyglycosids, umfassend den Schritt der mechanischen Behandlung eines Polysaccharids in Gegenwart einer Säure und eines hydrophoben Alkohols, wobei die mechanische Behandlung durch Mahlen, Extrudieren oder Kneten durchgeführt wird und wobei der hydrophobe Alkohol ein lineares oder verzweigtes C₆-C₂₂-Alkanol ist und wobei das Molverhältnis des hydrophoben Alkohols zu den Monomereinheiten des Polysaccharids von 1:10 bis 1:1 beträgt.

2. Verfahren gemäß Anspruch 1, wobei die Säure vor oder während der mechanischen Behandlung mit dem Polysaccharid in Kontakt gebracht wird.

3. Verfahren gemäß Ansprüchen 1 bis 2, wobei die mechanische Behandlung durch Mahlen durchgeführt wird, das durch Schwingmühlen, Rührmühlen, Mühlen mit gerührtem Medium, Vibrationsmühlen, Rührwerksmühlen, Rührwerkskugelmühlen, Hammermühlen oder Kugelmühlen durchgeführt wird.

4. Verfahren gemäß Ansprüchen 1 bis 3, wobei die mechanische Behandlung bei einer Reaktionstemperatur von 0 bis 300 °C, vorzugsweise 0 bis 150 °C, durchgeführt wird.

5. Verfahren gemäß Ansprüchen 1 bis 4, wobei die mechanische Behandlung für 1 min bis 12 Stunden durchgeführt wird.

6. Verfahren gemäß Ansprüchen 1 bis 5, wobei das Polysaccharid einen Restfeuchtegehalt von weniger als 20 Gew.-%, vorzugsweise weniger als 5 Gew.-%, aufweist.

7. Verfahren gemäß Ansprüchen 1 bis 6, wobei die Säure einen pKₛ-Wert von unter 2, vorzugsweise unter -2, aufweist.

8. Verfahren gemäß Ansprüchen 1 bis 7, wobei die Säure Schwefelsäure, Salzsäure, Schwefeldioxid, Schwefeltrioxid, Phosphorsäure, Wolframatophosphorsäure, Halogenalkancarbonsäure, Benzolsulfonsäuren und Derivate davon, Methansulfonsäure, Oxalsäure oder Salpetersäure ist.

9. Verfahren gemäß Ansprüchen 1 bis 8, wobei die Säure vor der mechanischen Behandlung mit dem Polysaccharid in Kontakt gebracht wird, um ein säureimprägniertes Polysaccharid herzustellen.

10. Verfahren gemäß Anspruch 9, wobei das säureimprägnierte Polysaccharid durch Behandlung des Polysaccharids mit einer Säure in einem organischen Lösungsmittel erhältlich ist.

11. Verfahren gemäß Anspruch 10, wobei das organische Lösungsmittel Wasser, C₁-C₂₂-Alkanol, Alkylether, C₄₋₁₈-Alkan, überkritisches Kohlendioxid, Dichlormethan, Tetrahydrofuran, Ethylacetat, Methylacetat oder Aceton ist.

12. Verfahren gemäß Ansprüchen 1 bis 11, wobei das Polysaccharid von Stärke, Cellulose, Hemicellulose oder Guar abgeleitet ist.

## Revendications

1. Procédé pour la préparation d'un alkylpolyglycoside comprenant l'étape de traitement mécanique d'un polysaccharide en la présence d'un acide et d'un alcool hydrophobe, dans lequel le traitement mécanique est effectué par broyage, extrusion ou pétrissage et dans lequel l'alcool hydrophobe est un alcanol en C₆ - C₂₂ linéaire ou ramifié, et dans lequel le rapport molaire de l'alcool hydrophobe sur les motifs monomérique du polysaccharide est de 1 : 10 à 1 : 1.

2. Procédé selon la revendication 1, dans lequel l'acide est mis en contact avec le polysaccharide avant ou pendant le traitement mécanique.

3. Procédé selon les revendications 1 à 2, où le traitement mécanique est effectué par broyage, qui est réalisé par des broyeurs oscillants, des broyeurs agités, des broyeurs à fluide agité, des broyeurs à vibration, des broyeurs à agitateur, des broyeurs à agitateur à bille, des broyeurs à marteau ou des broyeurs à bille.

4. Procédé selon les revendications 1 à 3, où le traitement mécanique est effectué à une température de réaction de 0 à 300 °C, de préférence 0 à 150 °C.

5. Procédé selon les revendications 1 à 4 où le traitement mécanique est effectué pendant 1 min à 12 heures.

6. Procédé selon les revendications 1 à 5, où le polysaccharide a une teneur en humidité résiduelle inférieure à 20 % en poids, de préférence inférieure à 5 % en poids.

7. Procédé selon les revendications 1 à 6 lorsque l'acide a un pKₛ inférieur à 2, de préférence inférieur à -2.

8. procédé selon les revendications 1 à 7 où l'acide est l'acide sulfurique, l'acide chlorhydrique, le dioxyde de soufre, le trioxyde de soufre, l'acide phosphorique, l'acide phosphotungstique, un acide halogénoalcanecarboxylique, des acides benzènesulfoniques et des dérivés correspondant, l'acide méthanesulfonique, l'acide oxalique et l'acide nitrique.

9. Procédé selon les revendications 1 à 8 où l'acide est mis en contact avec le polysaccharide avant le traitement mécanique pour préparer un polysaccharide imprégné d'acide.

10. Procédé selon la revendication 9, dans lequel le polysaccharide imprégné d'acide est obtenu en traitant le polysaccharide par un acide dans un solvant organique.

11. Procédé selon la revendication 10, dans lequel le solvant organique est l'eau, des alcanols en C₁-C₂₂, un éther d'alkyle, des alcanes en C₄₋₁₈, le dioxyde de carbone supercritique, le dichlorométhane, le tétrahydrofurane, l'acétate d'éthyle, l'acétate de méthyle ou l'acétone.

12. Procédé selon les revendications 1 à 11 où le polysaccharide est issu d'un amidon, d'une cellulose, d'une hémicellulose ou de guar.
